**Europäisches Patentamt**

**European Patent Office**

**Office européen des brevets**

(19)

(11) Veröffentlichungsnummer : **0 218 862 B2**

(12)                    # NEUE EUROPÄISCHE PATENTSCHRIFT

(45) Veröffentlichungstag der neuen Patentschrift :
24.06.92 Patentblatt 92/26

(51) Int. Cl.⁵ : **H04M 3/20, H04Q 3/545**

(21) Anmeldenummer : **86111804.0**

(22) Anmeldetag : **26.08.86**

(54) **Verfahren zum Aufschalten zusätzlicher Fernsprechwege und Tonsignale auf eine zwischen zwei Teilnehmern bestehendeFernsprechverbindung.**

(30) Priorität : **27.09.85 DE 3534547**

(43) Veröffentlichungstag der Anmeldung :
**22.04.87 Patentblatt 87/17**

(45) Bekanntmachung des Hinweises auf die
Patenterteilung :
**28.02.90 Patentblatt 90/09**

(45) Bekanntmachung des Hinweises auf die
Entscheidung über den Einspruch :
**24.06.92 Patentblatt 92/26**

(84) Benannte Vertragsstaaten :
**AT BE CH DE FR GB IT LI NL SE**

(56) Entgegenhaltungen :
**DE-A- 3 200 566**
**DE-A- 3 246 051**
**US-A- 4 445 211**

(56) Entgegenhaltungen :
**PATENTS ABSTRACTS OF JAPAN, Band 8, Nr.
78 (E-237)[1515], 10. April 1984; & JP-A-58 223
950 (NIPPON DENKI) 26-12-1983**
**PATENTS ABSTRACTS OF JAPAN, Band 5, Nr.
186 (E-84)[858], 25. November 1981; & JP-A-56
111 365 (HITACHI) 25-11-1981**

(73) Patentinhaber : **SIEMENS
AKTIENGESELLSCHAFT
Wittelsbacherplatz 2
W-8000 München 2 (DE)**

(72) Erfinder : **Leibersberger, Helmut, Dipl.-Ing.
Terofaistrasse 27
W-8000 München 21 (DE)**
Erfinder : **Zwack, Eduard, Dipl.-Ing. (FH)
Lochhauserstrasse 86
W-8039 Puchheim (DE)**
Erfinder : **Zander, Heinz
Schlierseestrasse 6
W-8000 München 90 (DE)**

EP 0 218 862 B2

## Beschreibung

In analogen Fernsprechvermittlungssystemen ist es üblich, zusätzliche Fernsprechwege über zusätzliche Wicklungen eines in einer bestehenden Fernsprechverbindung angeordneten Satzübertragers aufzuschalten. Tonsignale, wie zum Beispiel Anklopf- oder Aufschaltetonsignale gelangen über zeitweise an die bestehende Fernsprechverbindung angeschaltete Relaiskontakte zu den Teilnehmern. Das Aufschalten zusätzlicher Fernsprechwege in derartigen Fernsprechvermittlungssystemen erfordert umfangreiche Maßnahmen hinsichtlich der Pegelanpassung der miteinander verbundenen Fernsprechwege. Ein "gezieltes Anklopfen", das heißt Übertragen der Anklopftonsignale an nur einen Teilnehmer einer bestehenden Fernsprechverbindung, ist nicht möglich.

Digitale Fernsprechvermittlungssysteme erlauben mit Hilfe der zentralen Steuereinrichtungen und des digitalen Koppelnetzes das Aufschalten eines zusätzlichen Fernsprechweges auf eine bestehende Fernsprechverbindung, jedoch sind auch hier zusätzliche Maßnahmen hinsichtlich der Pegelanpassung beim Verbinden der Fernsprechwege erforderlich. Bei digitalen Fernmeldevermittlungssystemen wird das Teilnehmerleistungsmerkmal "Anklopfen" üblicherweise dadurch realisiert, daß die Anklopftonsignale zu einem Eingang des Koppelnetzes geführt werden und dort kurzzeitig in Richtung eines Teilnehmers an eine Einfügung bestehende Fernsprechverbindung geschaltet und der Fernsprechweg dieser Richtung zwischen den Teilnehmern kurzzeitig unterbrochen wird. Nach dem kurzzeitigen Anschalten der Anklopftonsignale wird die in einer Richtung wirksame Unterbrechung des Fernsprechweges mittels der zentralen Steuereinrichtung und des Koppelnetzes wieder aufgehoben. Das Anschalten der Anklopftonsignale und die Aufhebung der Unterbrechung des Fernsprechweges wird in regelmäßigen Intervallen solange durchgeführt, bis die im allgemeinen administrativ festgelegten Anklopfzeiten erreicht sind. Dieses fortwährende Schalten des Fernsprechweges führt einerseits zu einer höheren Belastung der zentralen Steuereinrichtung sowie zu einem erhöhten Meldungsverkehr zwischen den Vermittlungssystemkomponenten und andererseits zu einer Störung der Hörbeziehung der Teilnehmer der bestehenden Verbindung.

Die Erfindung betrifft ein Verfahren zum Aufschalten zusätzlicher Fernsprechwege und Tonsignale auf eine zwischen einem ersten und einem zweiten Teilnehmer bestehende Fernsprechverbindung in einem Fernsprechvermittlungssystem nach dem Oberbegriff des Patentanspruchs 1.

Durch die DE-A-32 46 051 ist für ein derartiges digitales Fernsprechvermittlungssystem eine Schaltungsanordnung bekannt, bei der Hörtonsignale mittels einer für Konferenz- und Aufschalteverbindungen vorgesehenen Mischereinrichtung in eine bestehende Verbindung eingespeist werden. Hierzu ist die Mischereinrichtung mit einem Hörtonspeicher und Einspeiseeinrichtung ausgestattet und über eine erste oder eine erste und zweite Koppelfeldstufe in eine bestehende Verbindung eingeschaltet. Dies setzt das Einschalten bzw. Einfügen der Mischereinrichtung während des Verbindungsaufbaus für jede das Aufschalten von Hörtönen erlaubende Verbindung voraus.

Aus der deutschen Offenlegungsschrift DE-A-32 00 566 ist bereits eine Konferenzschaltung bekannt, mit der im Falle eines besetzten Anschlusses Verbindungen durchgebracht werden können, indem einem Gesprächsteilnehmer durch einen Aufschalt oder Anklopfton mitgeteilt wird, daß ein neuer Anruf für ihn vorliegt. Dabei wird der jeweilige Aufschalt- oder Anklopfton in der Konferenzschaltung wie die Sprachproben eines weiteren Konferenzteilnehmers behandelt.

Der Erfindung liegt die Aufgabe zugrunde, das Verfahren der eingangs genannten Art für ein Fernmeldevermittlungssystem mit mehrstufigem Koppelnetz mit einer nur geringen Systembelastung auszugestalten.

Die Lösung dieser Aufgabe ergibt sich durch die kennzeichnenden Merkmale des Anspruchs 1.

Als wesentlich für die Erfindung ist anzusehen, daß sich Prozeduren im Zusammenhang mit den Leistungsmerkmalen "Aufschalten" und "Anklopfen" mit vergleichsweise geringem Rechneraufwand realisiert werden. Dabei werden Verbindungswege über das Zentralkoppelnetz auf ein Minimum beschränkt, ohne daß die Realisierung bestehender oder möglicherweise einzuleitender Verbindungen eingeschränkt wird. Neben dem geringem Rechneraufwand zeichnet sich die Erfindung durch den weiteren Vorteil aus, daß die Menge der im Zuge des Verfahrens abzuspeichernden Koppelnetzzustandsdaten auf ein Minimum beschränkt wird.

Diese Vorteile ergeben sich auch, wenn ein dritter Teilnehmer Anklopftonsignale an einen ersten Teilnehmer übermittelt und eine ursprüngliche Verbindung zwischen dem ersten und einem zweiten Teilnehmer aufgehoben werden soll, um den ersten und dritten Teilnehmer miteinander zu verbinden.

Nach einer weiteren vorteilhaften Ausführungsform der Erfindung ist vorgesehen, daß die in den Takt- und Tonerzeugungseinrichtungen erzeugten Signale ständig über je eine festgeschaltete Verbindung des Koppelnetzes der jeweiligen Anschlußeinheiten an hierfür vorgesehene Tonsignaleingänge der zugehörigen Konferenzeinrichtung geführt werden. Diese Lösung zeichnet sich ebenfalls durch vergleichsweise geringen steuerungstechnischen Aufwand im Zusammenhang mit der Anschaltung von Aufschalte- und Anklopftonsignalen aus.

Nach einer weiteren vorteilhaften Ausführungsform der Erfindung ist vorgesehen, daß die in der Takt- und Tonerzeugungseinrichtung der dem vom dritten Teilnehmer angewählten ersten Teilnehmer zugeordneten Anschlußeinheit für die Dauer der Fernsprechverbindung über das Koppelnetz dieser Anschlußeinheit an einen Teilnehmereingang der zugehörigen Konferenz- bzw. Aufschalteeinrichtung geführt werden. Damit gelangen die Anklopftonsignale nur zu dem ersten Teilnehmer, wobei in der dem dritten Teilnehmer zugeordneten Anschalteinheit die von der dort vorgesehenen Takt- und Tonerzeugungseinrichtung gelieferten Anklopftonsignale an den dritten Teilnehmer übertragen werden.

Allgemein können Teilnehmerleistungsmerkmale, die die Funktion Aufschalten zusätzlicher Fernsprechwege oder Tonsignale fordern, aufgrund des erfindungsgemäßen Verfahrens in kurzer Entwicklungszeit und wirtschaftlich in digitale Fernmeldevermittlungssysteme implementiert werden. Besonders trifft dies auf Teilnehmerleistungsmerkmale zu, die in Fernmeldenetzen zukünftig von den Administrationen gefordert werden oder die aufgrund des erfindungsgemäßen Verfahrens erst möglich oder realisierbar sind.

Im folgenden werden zwei Ausführungsbeispiele anhand der Zeichnung näher erläutert. Dabei zeigt

FIG 1 die für die Erläuterung der Realisierung des Teilnehmerleistungsmerkmals "Aufschalten" notwendigen Systemkomponenten eines digitalen Fernmeldenetzes in einem Blockschaltbild sowie die verfahrensgemäßen Verbindungen und

FIG 2 die Systemkomponenten für die Realisierung des Teilnehmerleistungsmerkmals "Anklopfen" und ebenfalls die verfahrensgemäßen Verbindungen.

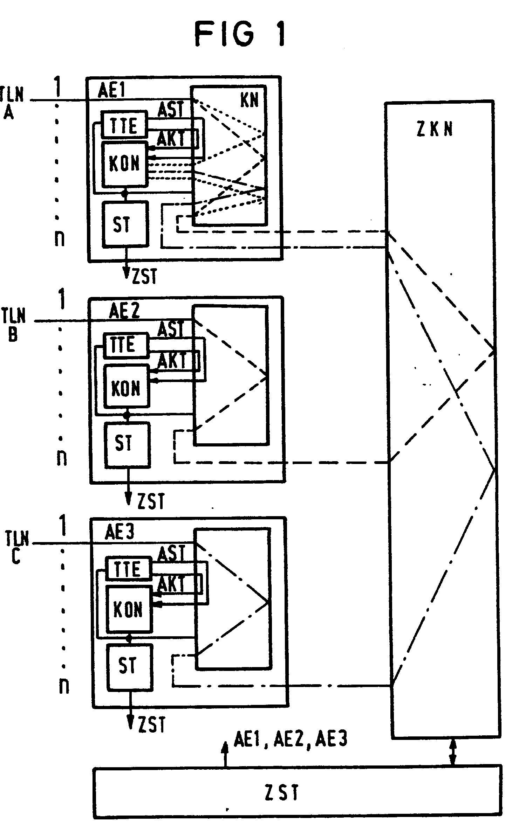

Fig 1 zeigt die für die Erläuterung notwendigen Systemkomponenten eines digitalen Fernmeldevermittlungssystems sowie drei an diese angeschlossene Teilnehmer (Fernmeldeteilnehmer) TLNA, TLNB, TLNC. Alle Teilnehmer, auch die mit 1...n gekennzeichneten, sind über nicht dargestellte Fernmeldenetze mit den Anschlußeinheiten AE1, AE2 und AE3 des Fernmeldevermittlungssystems verbunden. Jede Anschlußeinheit AE1, AE2, AE3 ist mit einem Koppelnetz KN, einer Konferenz- bzw. Aufschalteeinrichtung KON, einer Takt- und Tonerzeugungseinrichtung TTE sowie einer Steuereinrichtung ST ausgestattet. Weiterhin zeigt das Blockschaltbild nach FIG 1 ein zentrales Koppelnetz ZKN und eine zentrale Steuereinrichtung ZST. Das aus blockierungsfreien Zeitmultiplexstufen bestehende Koppelnetz des Fernmeldevermittlungssystems ist zweistufig aufgebaut, wobei die erste Koppelnetzstufe KN den Anschlußeinheiten AE1, AE2, AE3 und die zweite Koppelnetzstufe dem zentralen Steuerungsbereich zugeordnet ist und als zentrales Koppelnetz ZKN bezeichnet ist. Aufgrund der dynamischen Anforderungen werden die vermittlungstechnische Steuerung, sowie die sicherheitstechnischen und betrieblichen Aufgaben auf eine zentrale Steuereinrichtung ZST und auf Steuereinrichtungen ST in den Anschlußeinheiten AE1, AE2, AE3 aufgeteilt. Die Kommunikation der Steuereinrichtungen ST, ZST untereinander erfolgt über eigene Verbindungswege. Die den Anschlußeinheiten AE1, AE2, AE3 zugeordneten Takt- und Tonerzeugungseinrichtungen TTE liefern die für das Fernmeldevermittlungssystem notwendigen Takt- und Tonsignale, wie zum Beispiel Anklopftonsignale AKT und Aufschaltetonsignale AST. Die ebenfalls je Anschlußeinheit AE1, AE2, AE3 vorhandene Konferenz- bzw. Aufschalteeinrichtung KON, deren Grundprinzip im Linearisieren der digitalen Eingangssprachinformationen, im algebraischen Addieren der Sprachanteile der Konferenzteilnehmer und im Komprimieren der digitalen Ausgangssprachsignale für jeden Teilnehmer besteht, dient der Bildung von Konferenzverbindungen.

Teilnehmer TLNA und TLNB sind über ein nicht dargestelltes Fernmeldenetz an die Anschlußeinheiten AE1 bzw. AE2 angeschlossen und über die Koppelnetze KN der Anschlußeinheiten AE1 und AE2 sowie das zentrale Koppelnetz ZKN, - in FIG 1 durch die gestrichelten Linien dargestellt - untereinander verbunden. Die Verbindung wird, wie in digitalen Fernmeldevermittlungssystemen üblich, mittels der zentralen Steuereinrichtung ZST und den Steuereinrichtungen ST der Anschlußeinheiten AE1, bzw. AE2 hergestellt.

Ein weiterer Teilnehmer TLNC, der ebenfalls über ein nicht dargestelltes Fernmeldenetz an eine weitere Anschlußeinheit AE3 angeschlossen ist, wählt Teilnehmer TLNA an, worauf dem Teilnehmer TLNC der Besetzt- zustand des Teilnehmers TLNA mittels des Besetzttones mitgeteilt wird. Da Teilnehmer TLNC sofort Teilnehmer TLNA erreichen will, initiiert Teilnehmer TLNC über sein Endgerät das Teilnehmerleistungsmerkmal "Aufschalten". Aufgrund der Initialisierung dieses Teilnehmerleistungsmerkmals wird das Aufschalten des Fernsprechweges des Teilnehmers TLNC und der Aufschaltetonsignale AST eingeleitet. Mit Hilfe der Steuereinrichtung ST und des Koppelnetzes KN der Anschalteinheit AE1 wird die bestehende Fernsprechverbindung zwischen Teilnehmer TLNA und TLNB auf zwei Teilnehmereingänge der der Anschlußeinheit AE1 zugeordneten Konferenz- bzw. Aufschalteeinrichtung KON - in FIG 1 durch die gepunkteten Linien dargestellt - umgesteuert. Beide Teilnehmer TLNA, TLNB sind damit über das in der Konferenz- bzw. Aufschalteeinrichtung KON implementierte Konferenzkoppelnetz verbunden. Der Fernsprechweg des Teilnehmers TLNC, in FIG 1 durch strichpunktierte Linien gekennzeichnet, wird mittels der Steuereinrichtung ST in der Anschlußeinheit AE3 über deren Koppelnetz KN zum zentralen Koppelnetz ZKN gesteuert und mittels der zentralen Steuerung ZST über das zentrale Koppelnetz ZKN zu einem Eingang des Koppelnetzes KN der Anschlußeinheit AE1 vermittelt. Dieses Koppelnetz KN verbindet mittels der Steuereinrichtung ST den vom Teilnehmer TLNC kommenden Fernsprechweg mit einem weiteren Teilnehmereingang der Konferenz- bzw. Aufschalteeinrichtung KON. Die Anklopf- und Aufschaltetonsignale AST, AKT werden über eine ständig durch das Koppelnetz KN der Anschlußeinheit AE1 durchgeschaltete Verbindung an zwei hierfür vorgesehene Eingänge der Konferenz- bzw. Aufschalteeinrichtung KON geführt. Die Konferenz- bzw. Aufschalteeinrichtung KON fügt die Signale der drei Fernsprechwege analog einer Dreierkonferenzverbindung zusammen und schaltet zusätzlich die Aufschaltetonsignale AST in der Art auf die drei Fernsprechwege auf, daß sie zu jedem der drei Teilnehmer gelangen. Für das Aufschalten der Aufschaltetonsignale AST ist in der Konferenz- bzw. Aufschalteeinrichtung KON eine darauf zugeschnittene Betriebsweise erforderlich, da die Aufschaltetonsignale AST auf einer einfach gerichteten Verbindung übertragen werden und somit ein Summieren von Fernsprechund Tonsignalen für die Aufschaltetonsignalverbindung entfällt. Die grundsätzlichen technischen Verfahren, die in der Konferenz- bzw. Aufschalteeinrichtung KON implementiert sind, bleiben davon unberührt.

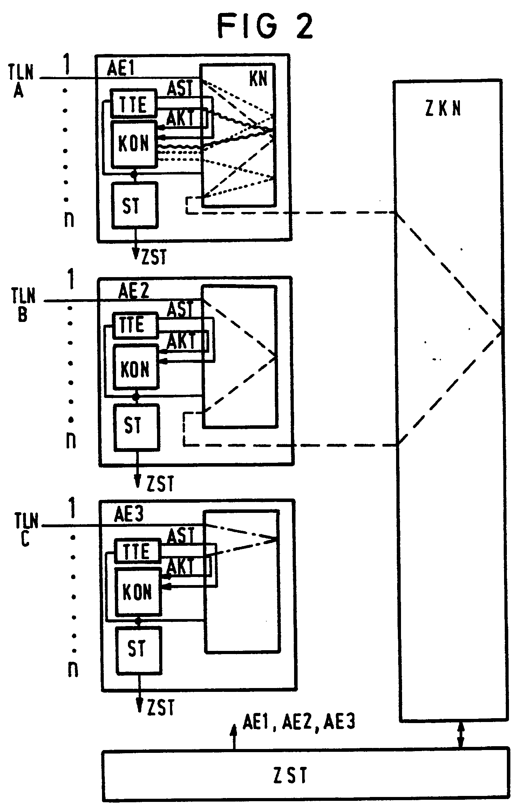

Fig 2 zeigt wie FiG 1 die zur Erläuterung notwendigen Systemkomponenten eines digitalen Fernsprechvermittlungssystems. Die Anordnung sowie die Funktionen der Systemkomponenten entsprechen den in FIG 1 erläuterten.

Teilnehmer TLNA ist über dieselben Systemkomponenten mittels gleicher Steuereinrichtungen ST, ZST wie in FIG 1 mit Teilnehmer TLNB verbunden und die Verbindung in FIG 2 durch gestrichelte Linien gekennzeichnet. Ein Teilnehmer TLNC, der wie in FIG 1 an die Vermittlungseinrichtung angeschlossen ist, wählt Teilnehmer TLNA an, worauf dem Teilnehmer TLNC der Belegtzustand des Teilnehmers TLNA mittels des Besetzttones mitgeteilt wird. Teilnehmer TLNA initiiert über sein Endgerät das Teilnehmerleistungsmerkmal "Anklopfen", um Teilnehmer TLNA darüber zu informieren, daß ein Verbindungswunsch eines weiteren Teilnehmers vorliegt. Aufgrund der Initialisierung dieses Teilnehmerleistungsmerkmals wird mittels der Steuereinrichtung ST über Koppelnetz KN der Anschlußeinheit AE1 die bestehende Fernsprechverbindung zwischen Teilnehmer TLNA und TLNB auf zwei Teilnehmereingänge der der Anschlußeinheit AE1 zugeordneten Konferenz- bzw. Aufschalteinrichtung KON - in FIG 2 durch gepunktete Linien dargestellt - umgesteuert. Beide Teilnehmer sind damit über das in der Konferenz- bzw. Aufschalteeinrichtung KON implementierte Konferenzkoppelnetz verbunden. Die Anklopf- und Aufschaltetonsignale AST, AKT, werden wie in FIG 1 gezeigt, auf Eingänge der Konferenz- bzw. Aufschalteeinrichtung KON geführt. Alternativ ist auch - wie in FIG 2 durch Wellenlinien dargestellt - ein Übertragen der Tonsignale AKT, AST über Verbindungen möglich, die für die Dauer einer Fernsprechverbindung im Koppelnetz KN der Anschlußeinheit AE1 auf Teilnehmereingänge der Konferenz- bzw. Aufschalteeinrichtung KON dieser Anschlußeinheit AE1 geschaltet werden. Diese Konferenz- bzw. Aufschalteeinrichtung KON schaltet die an Teilnehmereingängen oder hierfür vorgesehenen Eingängen ankommenden Anklopftonsignale AKT gezielt auf die bestehende Fernsprechverbindung auf, so daß die Anklopftonsignale AKT nur zu Teilnehmer TLNA gelangen. Für diese Aufgabe ist in der Konferenz-bzw. Aufschalteeinrichtung KON ebenfalls ein entsprechender, zum Konferenzverbindungsmodus abweichender Modus erforderlich, da das Summieren von Fernsprech- und Tonsignalen für die Anklopftonverbindung entfällt. In der Anschalteeinheit AE3 werden die von der Takt- und Tonerzeugungseinrichtung TTE gelieferten Anklopftonsignale AKT über das von der Steuereinrichtung ST in dieser Anschalteeinheit AE3 eingestellte Koppelnetz KN und über das nicht dargestellte Fernsprechnetz zum Teilnehmer TLNC übertragen.

Beendet Teilnehmer TLNB aufgrund der Anklopftonsignale AKT das Gespräch, wird die bestehende Fernsprechverbindung getrennt und der Fernsprechweg des Teilnehmers TLNA sofort mit dem nicht dargestellten, in dem zentralen und in dem der Anschlußeinheit AE3 zugeordneten Koppelnetz vorbelegten Fernsprechweg des Teilnehmers TLNC in bekannter Weise verbunden.

## Patentansprüche

1. Verfahren zum Aufschalten zusätzlicher Fernsprechwege und Tonsignale auf eine zwischen einem ersten und einem zweiten Teilnehmer (TLNA, TLNB) bestehende Fernsprechverbindung in einem Fernmeldevermittlungssystem, dessen Teilnehmer (TLNA, TLNB, TLNC) über digitale, anschlußeinheiten-individuelle Koppelnetze (KN) und ein digitales, zentrales Koppelnetz (ZKN) sowohl mittels zentraler als auch mittels in den Anschlußeinheiten (AE1, AE2, AE3) angeordneter Steuereinrichtungen (ZST, ST) verbunden werden, wobei die Anschlußeinheiten (AE1, AE2, AE3) Zugriff auf mindestens eine Einrichtung für Konferenz-bzw. Aufschalteverbindungen (KON) und Takt- und Tonerzeugung (TTE) haben, und wobei ein dritter Teilnehmer (TLNC), dem eine dem ersten oder zweiten Teilnehmer (TLNA, TLNB) nicht zugeordnete Anschlußeinheit (AE3) zugeordnet ist und dem nach dem Anwählen eines besetzten Endgerätes des ersten Teilnehmers (TLNA) ein Besetztton übermittelt wird, die Aufschaltung seines Fernsprechweges und von Tonsignalen auf die bestehende Fernsprechverbindung zwischen dem ersten und zweiten Teilnehmer (TLNA, TLNB) einleitet, **dadurch gekennzeichnet** , daß nach der Einleitung des Aufschaltens des Fernsprechweges des dritten Teilnehmers (TLNC) und von Tonsignalen die bestehende Fernsprechverbindung zwischen dem ersten und dem zweiten Teilnehmer (TLNA, TLNB) mittels der Steuereinrichtungen (ST, ZST) und des Koppelnetzes (KN) derjenigen Anschlußeinheit (AE1), über die die bestehende Fernsprechverbindung geführt wird und die dem vom dritten Teilnehmer (TLNC) angewählten ersten Teilnehmer (TLNA) zugeordnet ist, auf zwei Teilnehmereingänge der dieser Anschlußeinheit (AE1) zugeordneten, mit einem Konferenzkoppelnetz versehenen Konferenz- bzw. Aufschalteeinrichtung (KON) umgesteuert wird und der erste und der zweite Teilnehmer (TLNA, TLNB) über das voreingestellte Konferenzkoppelnetz der Konferenz- bzw. Aufschalteeinrichtung (KON) verbunden werden, daß der Fernsprechweg des dritten Teilnehmers (TLNC) oder von der Takt- und Tonerzeugungseinrichtung (TTE) erzeugte Tonsignale ebenfalls mit Hilfe der Steuereinrichtungen (ST, ZST) und der Koppelnetze (KN, ZKN) auf weitere Teilnehmereingänge derselben Konferenz- bzw. Aufschalteeinrichtung (KON) geführt werden und dieser zusätzliche Fernsprechweg und die Tonsignale mit Hilfe der Konferenz- bzw. Aufschalteeinrichtung (KON) gezielt über das Konferenz- bzw. Aufschaltekoppelnetz auf die bestehende Fernsprechverbindung aufgeschaltet werden.

2. Verfahren nach Anspruch 1, **dadurch gekennzeichnet** , daß durch die Einleitung des Aufschaltens durch den dritten Teilnehmer (TLNC) Anklopftonsignale (AKT) in der Takt- und Tonerzeugungseinrichtung (TTE) derjenigen Anschlußeinheit (AE1) erzeugt werden, zu dessen vom dritten Teilnehmer (TLNC) angewählten Teilnehmer (TLNA) die Anklopftonsignale (AKT) übertragen werden und an diese den Eingang des Koppelnetzes (KN) dieser Anschlußeinheit (AE1) übertragen sowie mittels deren Steuereinrichtung (ST) an einen Teilnehmereingang der Konferenz- bzw. Aufschalteeinrichtung (KON) vermittelt werden, und daß mit Hilfe der Konferenz- bzw. Aufschalteeinrichtung (KON) die Anklopftonsignale (AKT) gezielt auf die bestehende Verbindung aufgeschaltet werden.

3. Verfahren nach einem der vorhergehenden Ansprüche, **dadurch gekennzeichnet** , daß die in den Takt- und Tonerzeugungseinrichtungen (TTE) erzeugten Signale (AST, AKT) ständig über je eine fest geschaltete Verbindung des Koppelnetzes (KN) der jeweiligen Anschlußeinheiten (AE1, AE2, AE3) an hierfür vorgesehene Tonsignaleingänge der zugehörigen Konferenzeinrichtung (KON) geführt werden.

4. Verfahren nach Anspruch 1 oder 2, **dadurch gekennzeichnet** , daß die in der Takt- und Tonerzeugungseinrichtung (TTE) der dem vom dritten Teilnehmer (TLNC) angewählten ersten Teilnehmer (TLNA) zugeordneten Anschlußeinheit (AE1) erzeugten Tonsignale (AKT, AST) für die Dauer der Fernsprechverbindung über das Koppelnetz (KN) dieser Anschlußeinheit (AE1) an einen Teilnehmereingang der zugehörigen Konferenz- bzw. Aufschalteeinrichtung (KON) geführt werden.

## Claims

1. Method for offering additional telephone paths and tone signals to a telephone connection existing between a first and a second subscriber (TLNA, TLNB) in a telecommunication switching system, the subscribers (TLNA, TLNB, TLNC) of which are connected via digital terminating-unit-individual switching networks (KN) and a digital common switching network (ZKN) both by means of common control devices (ZST, ST) and by means of control devices (ZST, ST) arranged in the terminating units (AE1, AE2, AE3), the terminating units (AE1, AE2, AE3) having access to at least one device for conferencing and offering-type connections (KON) and clock and tone generation (TTE), and a third subscriber (TLNC), to whom a terminating unit (AE3) not allocated to the first or second subscriber (TLNA, TLNB) is allocated and to whom, after dialling a busy terminal of the first subscriber (TLNA), a busy tone is transmitted, initiating the offering of his telephone path and of tone signals to the existing telephone connection between the first and second subscribers (TLNA, TLNB), characterised in that, after the initiation of the offering of the telephone path of the third subsciber (TLNC) and of tone signals, the existing telephone connection between the first and the second subscriber (TLNA, TLNB) is rerouted by means of the control devices (ST, ZST) and of the switching network (KN) of the terminating unit (AE1) via which the existing telephone connection is conducted and which is allocated to the first subscriber (TLNA) dialled by the third subscriber (TLNC) to two subscriber inputs of the conferencing and offering device (KON) which is allocated to this terminating unit (AE1) and is provided with a conference switching network, and the first and the second subscriber (TLNA, TLNB) are connected via the preset conference switching network of the conferencing and offering device (KON), in that the telephone path of the third subscriber (TLNC) or tone signals generated by the clock and tone generating device (TTE) are likewise conducted to further subscriber inputs of the same conferencing and offering device (KON) with the aid of the control devices (ST, ZST) and of the switching networks (KN, ZKN), and this additional telephone path and the tone signals are selectively offered to the existing telephone connection with the aid of the conferencing and offering device (KON) via the conferencing and offering switching network.

2. Method according to Claim 1,

characterised in that,

due to the initiation of the offering by the third subscriber (TLNC), call-waiting tone signals (AKT) are generated in the clock and tone generating device (TTE) of the terminating unit (AE1) to whose subscriber (TLNA) dialled by the third subscriber (TLNC) the call-waiting tone signals (AKT) are transmitted and in that these are transmitted to the input of the switching network (KN) of this terminating unit (AE1) and are switched by means of the control device (ST) of the latter to a subscriber input of the conferencing and offering device (KON), and in that the call-waiting tone signals (AKT) are selectively offered to the existing connection with the aid of the conferencing and offering device (KON).

3. Method according to one of the preceding claims,

characterised in that

the signals (AST, AKT) generated in the clock and tone generating devices (TTE) are continuously conducted via a dedicated connection of the switching network (KN) of the respective terminating units (AE1, AE2, AE3) to tone signal inputs of the associated conferencing device (KON) which are provided for this purpose.

4. Method according to Claim 1 or 2,

characterised in that

the tone signals (AKT, AST) generated in the clock and tone generating device (TTE) of the terminating unit (AE1) allocated to the first subscriber (TLNA) dialled by the third subscriber (TLNC) are conducted to a subscriber input of the associated conferencing and offering device (KON) via the switching network (KN) of this terminating unit (AE1) for the duration of the telephone connection.

**Revendications**

1. Procédé pour réaliser le branchement (l'immixtion) de voies téléphoniques et de signaux acoustiques, supplémentaires, dans une liaison téléphonique établie entre un premier et un second abonnés (TLNA,TLNB) dans un centre de télécommunications, dont les abonnés (TLNA,TLNB,TLNC) sont reliés par l'intermédiaire de réseaux de couplage numériques, prévus individuellement pour les unités de raccordement, et par l'intermédiaire d'un réseau de couplage numérique central (ZKN), aussi bien à l'aide de dispositifs centraux de commande que de dispositifs de commande (ZST,ST) disposés dans les unités de raccordement (AE1,AE2,AE3), les unités de raccordement (AE1,AE2,AE3) ayant accès à au moins un dispositif pour l'établissement de liaisons de conférence ou d'immixtion (KON) et la production de signaux de cadence et de signaux acoustiques (TTE), et selon lequel un troisième abonné (TLNC), auquel est associée une unité de raccordement (AE3) non associée au premier ou au second abonné (TLNA,TLNB) et auquel est retransmise, après la sélection d'un appareil terminal occupé du premier abonné (TLNA), une tonalité d'occupation, qui déclenche l'immixtion de sa voie téléphonique et de signaux acoustiques dans la liaison téléphonique existante entre les premier et second abonnés (TLNA,TLNB), caractérisé par le fait qu'après le déclenchement de l'immixtion de la voie téléphonique du troisième abonné (TLNC) et de signaux acoustiques, la liaison téléphonique existante entre les premier et second abonnés (TLNA,TLNB) est commutée, au moyen des dispositifs de commande (ST,ZST) et du réseau de couplage (KN) de l'unité de raccordement (AE1) par l'intermédiaire de laquelle la liaison téléphonique existante passe et qui est associée au premier abonné (TLNA) sélectionné par le troisième abonné (TLNC), sur deux entrées d'abonnés du dispositif de conférence ou d'immixtion (KON), qui est associé à cette unité de raccordement (AE1) et est pourvu d'un réseau de couplage de conférence, et que les premier et second abonnés (TLNA,TLNB) sont raccordés par l'intermédiaire du réseau de couplage de conférence préréglé au dispositif de conférence ou d'immixtion (KON), que la voie téléphonique du troisième abonné (TLNC) ou des signaux acoustiques produits par le dispositif (TTE) de production de signaux de cadence et de signaux acoustiques sont également acheminés à l'aide des dispositifs de commande (ST,ZST) et des réseaux de couplage (KN,ZKN) à d'autres entrées d'abonnés du même dispositif de conférence ou d'immixtion (KON) et que cette voie téléphonique supplémentaire et les signaux acoustiques sont insérés volontairement dans la liaison téléphonique existante, au moyen du dispositif de conférence ou d'immixtion (KON), par l'intermédiaire du réseau de couplage de conférence ou d'immixtion.

2. Procédé suivant la revendication 1, caractérisé par le fait que sous l'effet du déclenchement de l'immixtion par un troisième abonné (TLNC), des signaux acoustiques de demande d'intervention (AKT) sont produits dans le dispositif (TTE) de production de signaux de cadence et de signaux acoustiques de la même unité de raccordement (AE1) que celle dont l'abonné (TLNA) sélectionné par le troisième abonné (TLNC) reçoit les signaux acoustiques de demande d'intervention (AKT), qui sont transmis à l'entrée du réseau de couplage (KN) de cette unité de raccordement (AE), ainsi que, par l'intermédiaire d'un dispositif de commande (ST) de cette unité, à une entrée d'abonné du dispositif de conférence ou d'immixtion (KON), et que les signaux de demande d'intervention (AKT) sont injectés volontairement dans la liaison existante à l'aide du dispositif de conférence ou d'immixtion (KON).

3. Procédé suivant l'une des revendications précédentes, caractérisé par le fait que les signaux (AST, AKT) produits dans le dispositif (TTE) de production de signaux de cadence et de signaux acoustiques sont envoyés en permanence, par l'intermédiaire d'une liaison branchée de façon fixe du réseau de couplage (KN) des unités de raccordement (AE1, AE2, AE3), à des entrées de signaux acoustiques, prévues à cet effet, du dispositif de conférence (KON).

4. Procédé suivant la revendication 1 ou 2, caractérisé par le fait que les signaux acoustiques (AKT,AST) produits dans le dispositif (TTE) de production de signaux de cadence et de signaux acoustiques de l'unité de raccordement (AE1) associé au premier abonné (TLNA) sélectionné par le troisième abonné (TLNC), sont envoyés pendant la durée de la liaison téléphonique, par l'intermédiaire du réseau de couplage (KN) de cette unité de raccordement (AE1), à une entrée d'abonné du dispositif de conférence ou d'immixtion (KON).

# FIG 1

# FIG 2